# EUROPEAN PATENT APPLICATION

(11) **EP 4 559 564 A1**
(43) Date of publication of application: **28.05.2025**
(21) Application number: 23211382.9
(22) Date of filing: 22.11.2023
(51) Int. Cl.: B01D 67/00, B01D 69/08

(54) **ON-LINE DRYING OF HOLLOW FIBER MEMBRANES**

(71) Applicant: Gambro Lundia AB, 226 43 Lund (SE)
(72) Inventor: BUCK, Reinhold, 88422 Alleshausen (DE); WOCHNER, Arnd, 72359 Dotternhausen (DE); LOEFFLER, Markus, 72379 Hechingen (DE); WEISSER, Jasmin, 72348 Rosenfeld (DE)
(74) Representative: Perchenek, Nils

(57) **Abstract**

The present invention relates to a continuous process for preparing permselective hollow fiber membranes being suitable, e.g., for hemodialysis, hemodiafiltration and hemofiltration of blood which comprises a two-stage drying and tempering treatment of the hollow fiber membranes. According to a further aspect, the invention relates to a continuous process for drying permselective hollow fiber membranes on-line. The invention also relates to devices for on-line drying of permselective hollow fiber membranes.

## Description

### Technical Field

The present disclosure relates to a continuous process for preparing permselective hollow fiber membranes being suitable, e.g., for hemodialysis, hemodiafiltration and hemofiltration of blood, which comprises a two-stage drying and tempering treatment of the hollow fiber membranes. According to a further aspect, the present disclosure relates to a continuous process for drying permselective hollow fiber membranes on-line. The present disclosure also relates to devices for on-line drying of permselective hollow fiber membranes.

### Background of the Invention

The production process of permselective hollow fiber membranes usually involves a step of drying the membranes before they can be transferred into a housing to manufacture a filter. Drying can be effected discontinuously, e.g., by preparing membrane strands or bundles and subsequently drying them in drying chambers or ovens, or continuously, i.e., on-line. Most on-line drying processes known in the prior art involve drying the hollow fiber membranes with hot air, e.g., in convection ovens.

WO 2016/102442 A1 discloses a device for continuously drying and tempering hollow fiber membranes comprising a plurality of individually heatable rollers. The axes of the rollers are parallel and lie in a common plane. The device allows for a two-stage drying and tempering treatment of the hollow fiber membranes.

It is an objective of the present disclosure to further improve on the device and the process disclosed in WO 2016/102442 A1.

### Summary of the Invention

The present disclosure relates to a continuous process for preparing permselective hollow fiber membranes which comprises a two-stage drying and tempering treatment of the hollow fiber membranes. The two-stage drying and tempering treatment results in a narrow pore size distribution and high selectivity of the final membranes. The present disclosure also relates to devices for on-line drying of permselective hollow fiber membranes which can perform the two-stage drying and tempering treatment. The devices comprise a plurality of rollers having a heatable surface featuring a coating consisting of aluminum titanate. The coating has a thickness of from 50 to 150 µm and an average surface roughness Rz, measured according to DIN 4768:1990, of from 10 µm to 20 µm.

### Short description of the drawings

- Fig. 1: is a schematic drawing of an embodiment of the online drying device of the present disclosure,
- Fig. 2: shows heating curves measured during on-line drying for a) Comparative Example 1 and b) Example 1.

### Detailed Description

The present disclosure provides a continuous process for preparing permselective hollow fiber membranes comprising subjecting the hollow fiber membranes to a two-stage drying and tempering treatment, wherein the two-stage drying and tempering treatment comprises drying the hollow fiber membranes at a temperature in the range of from 210 to 280°C for a time in the range of from 1 to 4 seconds; and subsequently tempering the hollow fiber membranes at a temperature in the range of from 180 to 200°C, for a time in the range of from 2 to 5 seconds, characterized in that the drying step involves contacting the hollow fiber membrane with the outer surface of at least one heated roller featuring a coating consisting of aluminum titanate and having a thickness of from 50 to 150 pm, e.g., from 80 µm to 150 pm, for instance, from 100 µm to 130 µm; and an average surface roughness Rz, measured according to DIN 4768:1990, of from 10 µm to 20 pm, e.g., from 12 µm to 18 pm, for instance, from 14 µm to 16 µm.

In some embodiments, the process of the present disclosure comprises the steps of continuously
a) extruding a polymer solution comprising
   i. at least one polysulfone, polyethersulfone (PES), or polyarylethersulfone (PAES), optionally in combination with polyamide (PA);
   ii. at least one polyvinylpyrrolidone (PVP); and
   iii. at least one solvent;
   through an outer ring slit of a nozzle with two concentric openings into a precipitation bath; simultaneously
b) extruding a center fluid through the inner opening of the nozzle;
c) washing the hollow fiber membrane obtained;
d) subjecting the hollow fiber membrane to a two-stage drying and tempering treatment comprising drying the hollow fiber membrane by applying a temperature in the range of from 210 to 280°C, e.g., 220 to 260°C, to the outer surface of the hollow fiber membranes for a time in the range of from 1 to 4 seconds, e.g., 2 to 3 seconds; and subsequently tempering the hollow fiber membrane by applying a temperature in the range of from 180 to 200°C, to the outer surface of the hollow fiber membranes for a time in the range of from 2 to 5 seconds, e.g., 3 to 4 seconds,
characterized in that the drying step involves contacting the hollow fiber membrane with the outer surface of at least one heated roller featuring a coating consisting of aluminum titanate and having a thickness of from 50 to 150 pm, e.g., from 80 µm to 150 pm, for instance, from 100 µm to 130 µm; and an average surface roughness Rz, measured according to DIN 4768:1990, of from 10 µm to 20 pm, e.g., from 12 µm to 18 pm, for instance, from 14 µm to 16 µm.

The two-stage drying and tempering treatment provides for adequate evaporation of water and a defined shrinkage of pores. In one embodiment of the process, drying and tempering are effected by contacting the hollow fiber membrane with hot surfaces (e.g., heated rollers) having a temperature in the range of from 180 to 280°C. The drying step involves contacting the hollow fiber membrane with the outer surface of at least one heated roller featuring a coating consisting of aluminum titanate and having a thickness of from 50 to 150 µm, e.g., from 80 µm to 150 µm, for instance, from 100 µm to 130 µm; and an average surface roughness Rz, measured according to DIN 4768:1990, of from 10 µm to 20 µm, e.g., from 12 µm to 18 µm, for instance, from 14 µm to 16 µm. In one embodiment, the roller has been coated with the layer of aluminum titanate (Al₂O₃•TiO₂) using a plasma spraying process.

Without wishing to be bound by theory, it is believed that the particular coating of the rollers allows for improved heat transfer from the roller surface to the hollow fiber membrane. Water removal from the hollow fiber membrane is accelerated, enabling higher spinning speed and higher transport velocity through the on-line dryer and resulting in higher throughput.

The polymer solution which is used in step a) ("the spinning solution") comprises at least one polysulfone, polyethersulfone (PES), or polyarylethersulfone (PAES), optionally in combination with polyamide (PA); and at least one polyvinylpyrrolidone (PVP). In one embodiment, a polyvinylpyrrolidone which consists of a low molecular weight component having a molecular weight of below 100 kDa and a high molecular weight component having a molecular weight of 100 kDa or more is used for preparing the membrane.

An example of a suitable polyethersulfone is a polymer having the general formula -[O-Ph-SO₂-Ph-]ₙ-, a weight average molecular weight of about 60,000 to 65,000 Da, preferably 63,000 to 65,000 Da, and an Mw/Mn of about 1.5 to 1.8.

In one embodiment of the process, the polymer solution comprises from 12 to 16 wt%, related to the total weight of the solution, of polyethersulfone and from 3 to 12 wt%, e.g. 5 to 8 wt%, related to the total weight of the solution, of PVP, wherein said PVP consists of 3 to 8 wt%, e.g. 4 to 6 wt%, related to the total weight of the solution, of a low molecular weight (< 100 kDa) PVP component and 0 to 4 wt%, e.g. 1 to 3 wt%, related to the total weight of the solution, of a high molecular weight (≥ 100 kDa) PVP component. In one embodiment, the total PVP contained in the spinning solution consists of from 22 to 34 wt%, e.g., from 25 to 30 wt% of a high molecular weight (≥ 100 kDa) component and from 66 to 78 wt%, e.g., from 70 to 75 wt% of a low molecular weight (< 100 kDa) component. Examples for high and low molecular weight PVP are, for example, PVP K85/K90 and PVP K30, respectively.

In a particular embodiment, the polymer solution further comprises 66-81 wt% of solvent, related to the total weight of the solution, and 0-10 wt%, e.g., 0-5 wt%, related to the total weight of the solution, of suitable additives. Suitable additives are, for example, chosen from the group consisting of water, glycerol, and other alcohols. In one embodiment, water is present in the spinning solution in an amount of from 0 to 8 wt%, e.g., in an amount of from 2 to 6 wt%, related to the total weight of the solution.

In one embodiment, the solvent used in the process is chosen from the group consisting of N-methyl pyrrolidone (NMP), N-ethyl pyrrolidone, N-octyl pyrrolidone, dimethylacetamide (DMAC), dimethyl sulfoxide (DMSO), dimethyl formamide (DMF), butyrolactone and mixtures of said solvents. In a particular embodiment, NMP is used as the solvent.

The dynamic viscosity of the polymer solution, measured according to DIN EN ISO 1628-1 at 22°C, usually is in the range of from 2,000 to 10,000 mPa·s, e.g., from 2,500 to 8,000 mPa·s, or even 2,500 to 5,000 mPa·s.

The center fluid or bore liquid which is used in step b) of the process of the present disclosure comprises at least one of the above-mentioned solvents and a precipitation medium chosen from the group of water, glycerol, and other alcohols.

In certain embodiments, the center fluid additionally comprises a further additive to modify the surface of the membrane to further increase the performance of the membrane. In one embodiment of the invention, the amount of the additive in the center fluid is from 0.02 to 2 wt%, for example from 0.05 to 0.5 wt%, or from 0.05 to 0.25 wt%, related to the total weight of the center fluid.

Examples of suitable additives include hyaluronic acid and zwitterionic polymers as well as copolymers of a vinyl polymerizable monomer having a zwitterion in the molecule and another vinyl polymerizable monomer. Examples of zwitterionic (co)polymers include phosphobetains, sulfobetains, and carboxybetains.

The center fluid generally comprises 40-100 wt% precipitation medium and 0-60 wt% of solvent. In one embodiment of the process, the center fluid comprises 44-69 wt% precipitation medium and 31-56 wt% of solvent. In a particular embodiment, the center fluid comprises 49-63 wt% of water and 37-51 wt% of NMP. In another embodiment, the center fluid comprises 53-56 wt% of water and 44-47 wt% of NMP.

In one embodiment of the process, the polymer solution coming out through the outer slit opening of the spinneret is guided through a spinning shaft with controlled atmosphere. In one embodiment of the process, the spinning shaft is held at a temperature within the range of from 2 to 90°C, e.g., within the range of from 25 to 70°C, or from 30 to 60°C.

In one embodiment, the precipitating hollow fiber is exposed to a humid steam/air mixture comprising a solvent in a content of from 0 to 10 wt%, for instance, from 0 to 5 wt%, or from 0 to 3 wt%, related to the water content. The temperature of the humid steam/air mixture is at least 15°C, preferably at least 30°C, and at most 75°C, e.g., not higher than 62°C. Further, the relative humidity in the humid steam/air mixture is from 60 to 100%.

The effect of the solvent in the temperature-controlled steam atmosphere is to control the speed of precipitation of the fibers. When less solvent is employed, the outer surface will obtain a denser surface, and when more solvent is used, the outer surface will have a more open structure. By controlling the amount of solvent within the temperature-controlled steam atmosphere surrounding the precipitating membrane, the amount and size of the pores on the outer surface of the membrane can be modified and controlled.

In one embodiment of the process of the present disclosure, the temperature of the spinneret is 50-70°C, e.g., 50-60°C, the temperature of the spinning shaft is 25-65°C, for instance, 50-60°C. The distance between the opening of the nozzle and the precipitation bath is from 30 to 110 cm, for instance, 45 to 55 cm. The precipitation bath has a temperature of 10-80°C, e.g., 20-40°C. In one embodiment, the spinning velocity is in the range of 15-100 m/min, for instance, 35-75 m/min.

In one embodiment of the invention, the precipitation bath comprises from 85 to 100 wt% of water and from 0 to 15 wt% of solvent, e.g., NMP. In another embodiment, the precipitation bath comprises from 90 to 100 wt% water and from 0 to 10 wt% NMP.

The hollow fiber membrane obtained by steps a) and b) is subsequently washed to remove waste components (step c). In one embodiment of the process, the hollow fiber membrane is passed through at least one water bath at a temperature in the range of from 65 to 90°C. In another embodiment, the membrane is passed through two water baths. In still another embodiment, the membrane is passed through five water baths. In certain embodiments of the process, the individual water baths have different temperatures. For instance, each water bath may have a higher temperature than the preceding water bath.

The membrane then is subjected to a two-stage drying and tempering treatment (step d) which comprises drying said membrane by applying a temperature in the range of from 210 to 280°C, e.g., 220 to 260°C, to the outer surface of the membrane for a time in the range of from 1 to 4 seconds, e.g., 2 to 3 seconds; and subsequently tempering said membrane by applying a temperature in the range of from 180 to 200°C to the outer surface of the membrane for a time in the range of from 2 to 5 seconds, e.g., 2 to 4 seconds.

The drying step involves contacting the hollow fiber membrane with the outer surface of at least one heated roller featuring a coating consisting of aluminum titanate and having a thickness of from 50 to 150 pm, e.g., from 80 µm to 150 pm, for instance, from 100 µm to 130 µm; and an average surface roughness Rz, measured according to DIN 4768:1990, of from 10 µm to 20 pm, e.g., from 12 µm to 18 pm, for instance, from 14 µm to 16 µm. In some embodiments of the process, the hollow fiber membrane is contacted with the outer surface of several heated rollers featuring a coating consisting of aluminum titanate, e.g., from 2 to 6 rollers, for instance, two rollers, three rollers, four rollers, five rollers, or six rollers.

The hollow fiber membrane optionally is sterilized after dying. Suitable sterilization methods include treatment with steam, ethylene oxide, or radiation. In one embodiment of the process, the hollow fiber membrane is steam-sterilized at temperatures of at least 121°C for at least 21 minutes.

In one embodiment, the membrane obtained by the process of the present disclosure comprises 80-99 wt% of polysulfone, polyethersulfone (PES), or polyarylethersulfone (PAES), optionally in combination with polyamide (PA); and 1-20 wt% of polyvinylpyrrolidone (PVP).

In one embodiment, the PVP comprised in the permselective hollow fiber membrane consists of a high (≥ 100 kDa) and a low (< 100 kDa) molecular weight component and comprises 10-45 wt%, based on the total weight of PVP in the membrane, of a high molecular weight component, and 55-90 wt%, based on the total weight of PVP in the membrane, of a low molecular weight component.

In one embodiment, the hollow fiber membrane obtained by the process of the present disclosure has an inner diameter of from 180 to 250 um. In another embodiment, the inner diameter is 185 to 195 um. In still another embodiment, the inner diameter is 210 to 220 um.

The wall thickness of the hollow fiber membrane usually is in the range of from 20 to 55 um. In one embodiment, the wall thickness is 33 to 37 um. In another embodiment, the wall thickness is 38 to 42 um. In still another embodiment, the wall thickness is 43 to 47 um. In yet another embodiment, the wall thickness is 48 to 52 um.

The hollow fiber membrane obtained by the process of the present disclosure can have a symmetric wall structure or an asymmetric wall structure. In one embodiment, the membrane wall has a symmetric sponge structure. In another embodiment, the membrane wall has an asymmetric sponge structure. In yet another embodiment of the process, the membrane wall has an asymmetric wall structure and comprises a layer having a finger structure, i.e., featuring macrovoids having a size of more than 5 um.

A further aspect of the present disclosure is a device capable of performing a continuous two-stage drying and tempering treatment of permselective hollow fiber membranes.

The device for continuously drying and tempering hollow fiber membranes 4 comprises a plurality of rollers 5 disposed within a housing 1. The housing 1 has an inlet 2 and an outlet 3 for the hollow fiber membranes 4 and an exhaust 7.

The rollers 5 are configured to heat the hollow fiber membranes 4. The hollow fiber membranes 4 are passed over the outer surface of the rollers 5, contacting the hot surface and being heated in the process. The outer surface of each roller 5 of the plurality of rollers 5 is heatable individually. In one embodiment, the outer surface of each roller (5) is configured to be heatable to a temperature in the range of from 150°C to 300°C. The temperature of each roller 5 is controlled individually. Heating can be performed by various methods. For instance, the outer surface of the roller 5 can be heated electrically, i.e., by resistance heating or inductive heating, or it can be heated by radiation heating from the inside of the roller 5. At least one of the rollers 5 features a coating consisting of aluminum titanate and having a thickness of from 50 to 150 pm, e.g., from 80 µm to 150 pm, for instance, from 100 µm to 130 µm; and an average surface roughness Rz, measured according to DIN 4768:1990, of from 10 µm to 20 pm, e.g., from 12 µm to 18 pm, for instance, from 14 µm to 16 µm. in some embodiments of the device, at least two of the rollers 5 feature a coating consisting of aluminum titanate and having a thickness of from 50 to 150 pm, e.g., from 80 µm to 150 pm, for instance, from 100 µm to 130 µm; and an average surface roughness Rz, measured according to DIN 4768:1990, of from 10 µm to 20 pm, e.g., from 12 µm to 18 pm, for instance, from 14 µm to 16 µm. In some embodiments of the device, four to six of the rollers 5 feature a coating consisting of aluminum titanate and having a thickness of from 50 to 150 µm, e.g., from 80 µm to 150 pm, for instance, from 100 µm to 130 µm; and an average surface roughness Rz, measured according to DIN 4768:1990, of from 10 µm to 20 pm, e.g., from 12 µm to 18 pm, for instance, from 14 µm to 16 µm. In some embodiments of the device, each roller 5 features a coating consisting of aluminum titanate and having a thickness of from 50 to 150 pm, e.g., from 80 µm to 150 pm, for instance, from 100 µm to 130 µm; and an average surface roughness Rz, measured according to DIN 4768:1990, of from 10 µm to 20 pm, e.g., from 12 µm to 18 pm, for instance, from 14 µm to 16 µm.

Each roller 5 is individually driven by a drive 6. The drive 6 usually will be a motor. The speed of each roller 5 is regulated individually. In one embodiment, each roller 5 is configured to rotate at a circumferential speed in the range of from 30 to 100 m/min, e.g., 45 to 75 m/min.

The rollers 5 are positioned within the housing 1 such that the axes of all rollers 5 are parallel and all axes lie in a single common plane. In one embodiment, the number of rollers 5 is 2 to 20, e.g., 5 to 10, for instance, 8 to 10. In one embodiment, the gap a between the first two rollers 5 downstream of the inlet 2 is in the range of 0.2 to 8 mm, for instance, 1 to 7 mm, e.g., 3 to 5 mm. In one embodiment, all rollers 5 in the device have the same diameter D. In one embodiment of the device, the diameter D is in the range of from 200 to 300 mm.

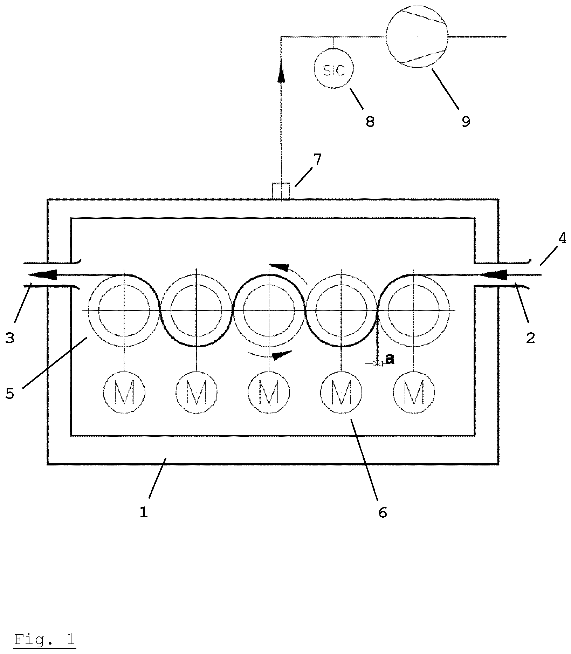

On their way through the device from the inlet 2 to the outlet 3, the hollow fibers 4 pass over the heated surfaces of the rollers 5 as shown in Fig.1. For a device, with rollers of equal size, the length of each individual hollow fiber 4 in contact with the heated surface of the rollers 5 (the "contact length") approximately is (N-1)*n*D, wherein N is the number of rollers 5 in the device, and D is the Diameter of a roller 5. In one embodiment of the device, the contact length is at least 1 m. In another embodiment, the contact length is at least 2 m. In still another embodiment, the contact length is at least 6 m.

In one embodiment of the device, every other roller 5 of the plurality of rollers 5 is configured to be moveable to a position wherein its axis is outside the plane formed by the axes of the two adjacent rollers 5.

The housing 1 features an exhaust 7, which is connected to a fan 9. During operation of the device, the fan 9 removes water vapor generated by evaporating water from the hollow fiber membranes 4 from housing 1, thereby supporting the drying process. The throughput of the fan 9 is controlled by a controller 8. In one embodiment, the fan 9 is configured to have a throughput in the range of from 200 to 400 m³ gas per hour.

In one embodiment of the device, the hosing 1 is configured to be separated into two compartments, each compartment comprising a part of the total number of rollers 5. In an illustrative example of the device, the total number of rollers is 10; the first compartment downstream the inlet 2 comprising 4 rollers 5 and the second compartment comprising 6 rollers 5.

An illustrative embodiment of the device having five rollers 5 is shown in Fig. 1. The device comprises a housing 1 having an inlet 2 and an outlet 3 for hollow fiber membranes 4. Five rollers 5 are disposed within the housing 1.

Each roller 5 is driven individually by a motor 6. Fig. 1 shows the device during treatment of hollow fiber membranes 4 (in "working position"). The rollers 5 are positioned within the housing such that their centers are aligned. The minimum distance a between the first two rollers 5 is also shown. As illustrated by Fig. 1, the hollow fiber membranes 4 enter the device through inlet 2, pass over the surface of rollers 5 and leave the device through outlet 3. The housing 1 features an exhaust 7, which is connected to a fan 9. The throughput of the fan 9 is controlled by controller 8. In one embodiment of the device, the fan is configured to remove a gas volume of 200 to 400 m³ per hour from the housing 1.

### Examples

The dynamic viscosity η of the polymer solutions was determined according to DIN ISO 1628-1 at a temperature of 22°C using a capillary viscosimeter (ViscoSystem^{®} AVS 370, Schott-Geräte GmbH, Mainz, Germany).

### Comparative Example 1

A polymer solution was prepared by dissolving polyethersulfone (Ultrason^{®} 6020, BASF Aktiengesellschaft) and polyvinylpyrrolidone (K30 and K85, BASF Aktiengesellschaft) and distilled water in N-methyl pyrrolidone (NMP). The weight fraction of the different components in the polymer spinning solution was PES/PVP K85/PVP K30/H₂O/NMP = 12.8 wt%/1.7 wt%/4.1 wt%/5.0 wt%/76.4 wt%. The viscosity of the polymer solution was 2,550 mPa·s.

A bore liquid was prepared by mixing distilled water and N-methyl pyrrolidone (NMP). The weight fraction of the two components in the center fluid was: H₂O/NMP = 56 wt%/44 wt%.

A membrane was formed by heating the polymer solution to 50°C and passing the solution as well as the bore liquid through a spinning die. The temperature of the die was 54°C and of the spinning shaft was 50°C. The hollow fiber membrane was formed at a spinning speed of 60 m/min. The liquid capillary leaving the die was passed into a water bath having a temperature of 30°C. The distance between the die and the precipitation bath was 100 cm. The hollow fiber membrane formed was guided through 5 different water baths.

After leaving the fifth water bath, the fibers were fed to an on-line dryer having two compartments with heated rollers, compartment 1 comprising 4 heated rollers and compartment 2 comprising 6 heated rollers.

The membranes were dried in the first compartment at temperatures in the range of from 220 to 270°C (rollers 1-4: 255/270/260/225°C) and tempered in the second compartment at temperatures in the range of from 180 to 200°C (rollers 5-10: 200/195/190/180/180/180°C). Residence time in the first compartment was 2.0 seconds, residence time in the second compartment was 2.7 seconds. Rollers 1-4 featured a coating of aluminum titanate having a thickness of 250 µm and an average surface roughness Rz of 21 µm.

The dry hollow fiber membrane had an inner diameter of 190 µm and an outer diameter of 260 µm and a fully asymmetric membrane structure. The active separation layer of the membrane was at the inner side. The active separation layer is defined as the layer with the smallest pores.

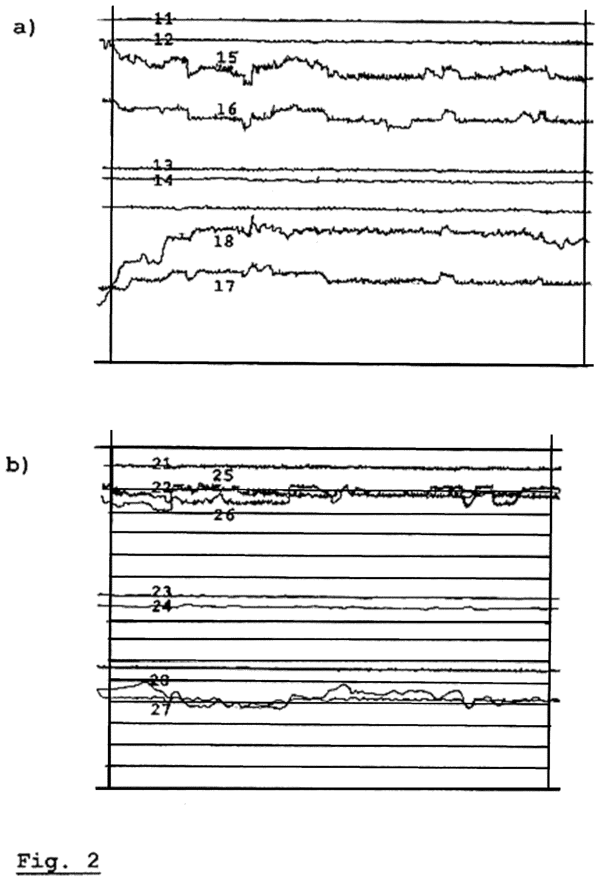

Fig. 2a shows heating curves measured in the on-line dryer during the experiment. Roller 2 was held at a temperature of 270°C, curve 11 shows temperature over time for roller 2. Roller 3 was held at a temperature of 260°C, curve 12 shows temperature over time for roller 3. Roller 5 was held at a temperature of 200°C, curve 13 shows temperature over time for roller 5. Roller 6 was held at a temperature of 195°C, curve 14 shows temperature over time for roller 2.

Curve 15 shows power consumption of roller 2 over time. Power consumption varied between 53.1% and 54.9% of maximum power, with an average value of 53.8%.

Curve 16 shows power consumption of roller 3 over time. Power consumption varied between 47.3% and 49.7% of maximum power, with an average value of 48.6%.

Curve 17 shows power consumption of roller 5 over time. Power consumption varied between 29.3% and 30.7% of maximum power, with an average value of 29.6%.

Curve 18 shows power consumption of roller 6 over time. Power consumption varied between 34.2% and 36.1% of maximum power, with an average value of 35.4%.

### Example 1

Comparative Example 1 was repeated. After leaving the fifth water bath, the fibers were fed to an on-line dryer having two compartments with heated rollers, compartment 1 comprising 4 heated rollers and compartment 2 comprising 6 heated rollers.

The membranes were dried in the first compartment at a temperature in the range of from 220 to 260°C (rollers 1-4: 250/260/250/220°C) and tempered in the second compartment at a temperature in the range of from 180 to 200°C (rollers 5-10: 200/195/190/180/180/180°C). Residence time in the first compartment was 2.0 seconds, residence time in the second compartment was 2.7 seconds. Rollers 1-4 featured a coating of aluminum titanate having a thickness of 130 µm and an average surface roughness Rz of 15 µm.

The dry hollow fiber membrane had an inner diameter of 190 µm and an outer diameter of 260 µm and a fully asymmetric membrane structure. The active separation layer of the membrane was at the inner side.

Fig. 2b shows heating curves measured in the on-line dryer during the experiment. Roller 2 was held at a temperature of 260°C, curve 21 shows temperature over time for roller 2. Roller 3 was held at a temperature of 250°C, curve 22 shows temperature over time for roller 3. Roller 5 was held at a temperature of 200°C, curve 23 shows temperature over time for roller 5. Roller 6 was held at a temperature of 195°C, curve 24 shows temperature over time for roller 2.

Curve 25 shows power consumption of roller 2 over time. Power consumption varied between 54.1% and 55.9% of maximum power, with an average value of 55.0%.

Curve 26 shows power consumption of roller 3 over time. Power consumption varied between 53.2% and 55.1% of maximum power, with an average value of 54.1%.

Curve 27 shows power consumption of roller 5 over time. Power consumption varied between 29.3% and 31.1% of maximum power, with an average value of 30.4%.

Curve 28 shows power consumption of roller 6 over time. Power consumption varied between 29.1% and 32.3% of maximum power, with an average value of 30.6%.

When comparing Figs. 2a and 2b, it is evident that power consumption of rollers 2 and 3 is higher in Example 1 than in Comparative Example 1, although the surface temperatures of the rollers are lower in Example 1. This indicates improved heat transfer from the rollers to the hollow fiber membrane. While power consumption of roller 5 is similar in Comparative Example 1 and Example 1, power consumption of roller 6 is lower in Example 1 than in Comparative Example 1, indicating lower residual water content in the hollow fiber membrane. Both observations indicate that the drying process is more effective when the rollers of the present disclosure are used, which feature featured a coating of aluminum titanate having a thickness of from 50 to 150 µm and an average surface roughness Rz in the range of from 10 to 20 µm.

### List of reference numerals

- 1: housing
- 2: inlet
- 3: outlet
- 4: hollow fiber membrane
- 5: roller
- 6: motor
- 7: exhaust
- 8: controller
- 9: fan
- 11: temperature of roller 2 over time
- 12: temperature of roller 3 over time
- 13: temperature of roller 5 over time
- 14: temperature of roller 6 over time
- 15: power consumption of roller 2 over time
- 16: power consumption of roller 3 over time
- 17: power consumption of roller 5 over time
- 18: power consumption of roller 6 over time
- 21: temperature of roller 2 over time
- 22: temperature of roller 3 over time
- 23: temperature of roller 5 over time
- 24: temperature of roller 6 over time
- 25: power consumption of roller 2 over time
- 26: power consumption of roller 3 over time
- 27: power consumption of roller 5 over time
- 28: power consumption of roller 6 over time

## Claims

1. A continuous process for preparing permselective hollow fiber membranes comprising subjecting the hollow fiber membranes to a two-stage drying and tempering treatment, wherein the two-stage drying and tempering treatment comprises drying the hollow fiber membranes by applying a temperature in the range of from 210 to 280°C to the outer surface of the hollow fiber membranes for a time in the range of from 1 to 4 seconds; and subsequently tempering the hollow fiber membranes by applying a temperature in the range of from 180 to 200°C to the outer surface of the hollow fiber membranes, for a time in the range of from 2 to 5 seconds, **characterized in that** the drying involves contacting the hollow fiber membrane with the outer surface of at least one heated roller featuring a coating consisting of aluminum titanate and having a thickness of from 50 µm to 150 µm and an average surface roughness Rz, measured according to DIN 4768:1990, of from 10 µm to 20 µm.

2. The process of claim 1, wherein the hollow fiber membranes are dried by applying a temperature in the range of from 220 to 260°C to the outer surface of the hollow fiber membranes.

3. The process of claims 1 or 2, wherein the hollow fiber membranes are dried for a time in the range of from 2 to 3 seconds.

4. The process of any one of claims 1 to 3, wherein the hollow fiber membranes are tempered for a time in the range of from 2 to 4 seconds.

5. A device for continuously drying and tempering hollow fiber membranes (4) comprising a plurality of rollers (5) disposed within a housing (1), the housing (1) having an inlet (2) and an outlet (3) for the hollow fiber membranes (4) and an exhaust (7), wherein the rollers (5) are configured to heat the hollow fiber membranes (4); the outer surface of each roller (5) of the plurality of rollers (5) being individually heatable and each roller (5) being individually driven by a drive (6), and wherein the rollers (5) are positioned within the housing (1) such that the axes of all rollers (5) are parallel and all axes lie in a single common plane, **characterized in that** at least one of the rollers (5) features a coating consisting of aluminum titanate and having a thickness of from 50 µm to 150 µm and an average surface roughness Rz, measured according to DIN 4768:1990, of from 10 µm to 20 µm.

6. The device of claim 5, wherein the surface of each roller (5) is configured to be heatable to a temperature in the range of from 150°C to 300°C.

7. The device of claims 5 or 6, wherein each roller (5) is configured to rotate at a circumferential speed in the range of from 30 to 100 m/min.

8. The device of any one of claims 5 to 7, wherein the width of the gap (a) between the first two rollers (5) downstream of the inlet (2) is in the range of from 0.2 mm to 8 mm.

9. The device of any one of claims 5 to 8, wherein the number of rollers (5) is 2 to 20.

10. The device of any one of claims 5 to 9, wherein the aluminum titanate coating has been applied to the outer surface of the roller (5) using a plasma spraying process.

11. The device of any one of claims 5 to 10, wherein the exhaust (7) is connected to a fan (9) which is configured to remove a gas volume of 200 to 400 m³ per hour from the housing (1).
